# EUROPÄISCHE PATENTSCHRIFT

(11) **EP 2 714 455 B1**
(45) Veröffentlichungstag und Bekanntmachung des Hinweises auf die Patenterteilung: **22.03.2017**
(21) Anmeldenummer: 12714629.8
(22) Anmeldetag: 02.04.2012
(51) Int. Cl.: B60K 26/02, B60T 7/06

(54) **PEDALWERTGEBERANORDNUNG**
PEDAL VALUATOR ARRANGEMENT
ENSEMBLE CAPTEUR PÉDALE

(30) Priorität: 25.05.2011 DE 102011076474
(43) Veröffentlichungstag der Anmeldung: 09.04.2014
(73) Patentinhaber: Robert Bosch GmbH, 70442 Stuttgart (DE)
(72) Erfinder: CIZEK, Vaclav, 391 11 Plana nad Luznici (CZ)
(86) Internationale Anmeldenummer: PCT/EP2012/055937
(87) Internationale Veröffentlichungsnummer: WO 2012/159810

(56) Entgegenhaltungen:
- EP-A1- 0 983 912
- EP-A2- 0 256 466
- WO-A1-03/097414
- DE-A1- 19 727 309
- DE-A1- 19 851 468
- US-B1- 6 220 112

## Beschreibung

Die vorliegende Erfindung betrifft eine Pedalanordnung gemäß dem Oberbegriff des Anspruches 1.

### Stand der Technik

In Kraftfahrzeugen werden Pedalanordnungen, insbesondere Pedalwertgeberanordnungen mit einem Fahrpedal bzw. Gaspedal, eingesetzt, um den Fahrbetrieb bzw. die Leistung eines Antriebsmotors des Kraftfahrzeuges zu steuern oder zu regeln. Dabei sind die Pedale im unteren hinteren Bereich eines Fußraumes angeordnet zur Betätigung mit einem Fuß des Fahrers. Bei einem Unfall ist der Fahrer im Allgemeinen durch Insassenrückhaltesysteme, z. B. einem Sicherheitsgurt oder einem Airbag, vor Kopf- oder Brustverletzungen gesichert. Bei einem Unfall kann die Fahrgastzelle unterhalb der Instrumententafel durch den Motorblock eingedrückt werden und dadurch wird der verfügbare Fußraum verkleinert. Dies erhöht die Gefahr von Verletzungen an den Füßen des Fahrers. Insbesondere können Pedale, die in den Fußraum ragen, den vorhandenen Platz weiter einschränken und dadurch zu zusätzlichen Unfall bedingten Verletzungen führen. Aus diesem Grund ist es bekannt, an einer Pedalanordnung eine Einrichtung zum Bewegen des Pedales bei einem Unfall nach vorne, d. h. in Richtung zu dem Motorblock, zu bewegen um dadurch bei einem Unfall einen größeren Fußraum zur Verfügung zu haben.

Die EP 0 983 912 A1 zeigt eine Pedalanordnung für ein Kraftfahrzeug mit einem Pedal, einer mit dem Pedal verbundenen Pedaldruckstange zur Übertragung von auf das Pedal als Bremspedal ausgeübten Schubbewegungen bzw. Schubkräften, sowie einer Ausknickvorrichtung, die bei einem Unfall durch eine auf die Pedaldruckstange einwirkende Kraft ein seitliches Ausknicken der Pedaldruckstange und dadurch eine Verlagerung des Pedals in Richtung einer Spritzwand des Kraftfahrzeuges bewirkt, wobei die Ausknickvorrichtung einen sensorisch aktivierbaren Stellantrieb umfasst, der bei einer Unfall bedingten Aktivierung durch gesteuertes Ausknicken der Pedaldruckstange eine Pedalverlagerung zumindest bis in unmittelbare Nähe der Spritzwand bewirkt.

Die DE 198 51 468 A1 offenbart eine Pedalanordnung für ein Kraftfahrzeug, mit einer Mehrzahl von Pedalen, die jeweils an der Karosserie des Kfz angelenkt sind, wobei die Mehrzahl der Pedale an einem gemeinsamen Pedalträger angeordnet ist, und der Pedalträger relativ zu der Karosserie des Kfz verlagerbar ist.

Die DE 197 27 309 A1 offenbart eine Pedalerie für ein Kraftfahrzeug mit einem Bremssystem mit elektrischer Signalübertragung, wobei die Pedalerie mindestens ein Pedal aufweist, wobei die Pedale der Pedalerie beweglich in einem Gehäuse angeordnet sind und wobei das Gehäuse an einem Boden des Kraftfahrzeuges in einem Fußraum für einen Fahrer in Längsrichtung des Kraftfahrzeuges verstellbar ist.

Die WO 03/097414 A1 offenbart ein Pedalsicherheitssystem zur Pedalmontage.

### Offenbarung der Erfindung

### Vorteile der Erfindung

Erfindungsgemäße Pedalanordnung, insbesondere Pedalwertgeberanordnung, für ein Kraftfahrzeug, umfassend ein zwischen einer Ausgangsstellung und einer Endstellung bewegliches Pedal, insbesondere Fahrpedal, ein Lager für das Pedal, ein Lagerteil, an welchem das Lager angeordnet ist, eine Einrichtung zum Bewegen des Pedales bei einem Unfall nach vorne, wobei das Lagerteil als ein beweglicher Schlitten ausgebildet ist, so dass bei einem Unfall der Schlitten zusammen mit dem Lager und dem Pedal nach vorne von einer Fahrposition in eine Unfallposition bewegbar ist. Die Einrichtung zum Bewegen des Pedales ist dadurch in vorteilhafter Weise konstruktiv besonders einfach, weil das Lagerteil als Schlitten ausgebildet ist und dadurch keine aufwendigen Einrichtungen, wie z. B. ein sensorisch aktivierbarer Stellantrieb, erforderlich ist. Zweckmäßig ist somit der Schlitten ausschließlich mit mechanischen Mitteln oder Einrichtungen von der Fahrposition in die Unfallposition bewegbar.

Insbesondere sind der Schlitten, das Lagerteil und das Pedal aufgrund der bei einem Unfall wirkenden negativen Beschleunigungskräfte nach vorne bewegbar. Die Pedalanordnung benötigt somit keinen aktiven Antrieb, z. B. einen Elektromotor oder einen pyrotechnischen Antrieb, zum Bewegen des Schlittens, sondern allein aufgrund von negativen Beschleunigungskräften und der Massenträgheit des Schlittens und insbesondere des Lagerteils sowie insbesondere des Pedals bewegt sich der Schlitten nach vorne und dadurch steht ein ausreichend großer Fußraum auch bei einem Unfall zur Verfügung.

In einer weiteren Ausgestaltung ist der Schlitten und damit auch das Lagerteil und das Pedal erst bei einem Überschreiten wenigstens eines Grenzwertes der auf den Schlitten bei dem Unfall wirkenden negativen Beschleunigungskräften nach vorne bewegbar. Bei kleinen auftretenden negativen Beschleunigungskräften, z. B. beim Bremsen oder einem nur sehr kleinen Unfall, wird somit der Schlitten nicht nach vorne bewegt. Dies ist sinnvoll, da nur bei größeren negativen Beschleunigungskräften mit Verletzungen des Fahrers zu rechnen ist und nur in diesem Fall ein Bewegen des Schlittens nach vorne von der Fahrposition in die Unfallposition erforderlich ist.

Je größer die auf den Schlitten wirkenden negativen Beschleunigungskräfte sind, desto größer ist vorzugsweise der von dem Schlitten nach vorne ausgeführt Weg von der Fahrposition in die Unfallposition und umgekehrt. Die Bewegung des Schlittens kann somit individuell an die Stärke der negativen Beschleunigungskräfte bzw. die Stärke des Unfalls angepasst werden. Dabei liegen unterschiedliche Unfallpositionen vor, d. h. je größer der von dem Schlitten ausgeführte Weg ist, desto weiter befindet sich die Unfallposition in Richtung nach vorne bzw. in Richtung zu einem Antriebsmotor des Kraftfahrzeuges.

Vorzugsweise ist der Schlitten mittels einer Gleitlagerung bei der Bewegung von der Fahrposition in die Unfallposition beweglich gelagert. Eine Gleitlagerung ist konstruktiv einfach und dadurch preiswert in der Herstellung und ferner im Betrieb zuverlässig.

In einer Variante ist der Schlitten bei einem normalen Fahrbetrieb des Kraftfahrzeuges von wenigstens einem Halteelement in der Fahrposition gehalten. Im normalen Fahrbetrieb des Kraftfahrzeuges ist eine Bewegung des Schlittens nicht erforderlich. Aus diesem Grund wird der Schlitten von dem wenigstens einen Halteelement in der Fahrposition gehalten und nur bei den größeren auftretenden negativen Beschleunigungskräften bei einem Unfall ist eine Bewegung des Schlittens nach vorne möglich.

Zweckmäßig bricht bei einem Unfall aufgrund der auf den Schlitten wirkenden negativen Beschleunigungskräfte das wenigstens eine Halteelement aufgrund der von dem Schlitten mittelbar oder unmittelbar auf das wenigstens eine Halteelement aufgebrachten Kräfte, so dass der Schlitten von der Fahrposition in die Unfallposition bewegbar ist Von dem Schlitten, insbesondere von einer Gleitschiene des Schlittens, wird auf das wenigstens eine Halteelement eine Kraft aufgrund der auftretenden negativen Beschleunigungskräfte bzw. der Massenträgheit des Schlittens aufgebracht und dadurch bricht das wenigstens eine Halteelement und eine Bewegung des Schlittens nach vorne ist dadurch gewährleitstet bzw. möglich.

Vorzugsweise sind zwei bzw. mehrere bzw. wesentlich mehr als zwei Halteelemente vorgesehen. Die Halteelemente sind so angeordnet, dass bei einem Unfall beim Verschieben des Schlittens von der Fahrposition in Richtung zur Unfallposition mehrere Halteelemente zeitlich versetzt durchbrochen werden. Die Halteelemente können so ausgebildet sein, dass die Kraft, die zum Durchbrechen eines der Halteelemente erforderlich ist, größer oder kleiner ist als die Kraft die zum Durchbrechen eines der anderen Halteelemente erforderlich ist.

Die Halteelemente können vorzugsweise so ausgebildet sein, dass die erforderliche Kraft zum Brechen eines Halteelements, das zeitlich früher durchbrochen wird, kleiner ist als die Kraft zum Brechen eines Halteelements, das zeitlich später durchbrochen wird. Dies bietet den Vorteil, dass bei einem relativ leichten Unfall, bei dem sich der Schlitten nur relativ wenig aus der Fahrposition in Richtung zur Unfallposition bewegt, so dass nur relativ wenige Halteelemente durchbrochen werden, die den Fahrerfuß belastende Kraft bei einem relativ leichten Unfall kleiner ist als bei einem relativ schweren Unfall, bei dem größere auf den Fahrerfuß einwirkende Kräfte in Kauf genommen werden können.

Die erforderliche unterschiedlich große Kraft zum Brechen der verschiedenen Halteelemente wird beispielsweise dadurch erreicht, dass Halteelemente mit größerer erforderlicher Kraft zum Brechen eine größere Dicke und/oder eine kleinere Nut als Sollbruchstelle und/oder eine kleinere Biegelänge aufweisen.

Ist die Pedalanordnung so ausgebildet, dass die erforderliche Kraft zum Brechen der zuletzt brechenden Halteelemente ansteigt, dann bietet dies den Vorteil, dass auch bei einem relativ kurzen zur Verfügung stehenden Verschiebeweg des Schlittens auch die bei einem relativ schweren Unfall auftretende große Belastung des Fahrerfußes in vertretbaren Grenzen gehalten werden kann.

In einer weiteren Ausführungsform ist das wenigstens eine Haltelement wenigstens ein Haltestab und/oder wenigstens eine Rippe. Ein Haltestab oder eine Rippe ist in der Herstellung besonders einfach und vorzugsweise ist die wenigstens eine Rippe einteilig an einem Basishalteteil ausgebildet. Der wenigstens eine Haltestab kann den Schlitten in sämtlichen Richtungen, insbesondere in sämtlichen horizontalen Richtungen, halten und dadurch ist auch bei Kurvenfahrten oder einer Beschleunigung des Kraftfahrzeuges eine feste Anordnung des Schlittens gewährleistet.

Insbesondere sind mehrere Rippen hintereinander, vorzugsweise zusätzlich versetzt, in einer Richtung von der Fahrposition zu der Unfallposition ausgebildet. Bei einer Bewegung des Schlittens von der Fahrposition nach vorne in eine der mehreren Unfallpositionen werden somit bei der Bewegung nacheinander unterschiedliche Rippen durchbrochen bzw. zerstört und dadurch von den Rippen die negativen Beschleunigungskräfte des Schlittens aufgenommen.

In einer zusätzlichen Variante ist das wenigstens eine Halteelement, insbesondere die Rippe, und der Schlitz an dem Schlitten ausgebildet und die Gleitschiene ist an dem Basishalteteil ausgebildet. Eine an dem Basishaltehalteteil ausgebildete Gleitschiene führt somit im Gegensatz zu der an dem Schlitten ausgebildeten Gleitschiene selbst keine Bewegung bei einer Bewegung des Schlittens von der Fahrposition in die Unfallposition aus.

In einer weiteren Ausgestaltung bringt ein elastisches Element, insbesondere eine Feder, auf das Pedal eine Rückstellkraft in Richtung der Ausgangsstellung auf, um das Pedal in die Ausgangsstellung zu bewegen.

In einer weiteren Variante bringt eine Motoreinheit auf das Pedal eine Kraft, insbesondere Rückstellkraft, aufgrund einer mechanischen Verbindung zwischen der Motoreinheit und dem Pedal, insbesondere in Richtung der Ausgangsstellung, auf, insbesondere zur Erzeugung einer haptischen Rückmeldung an dem Pedal für ein aktives Pedal als Fahrpedal. In einer weiteren Ausgestaltung ist die Motoreinheit ein Elektromotor. Zweckmäßig ist die Motoreinheit auch ein Piezoelement oder Elektromagnet. Insbesondere weist die mechanische Verbindung zwischen dem Motoreinheit und dem Pedal ein Getriebe auf.

In einer weiteren Variante umfasst die Pedalanordnung einen Sensor zur Erfassung einer Stellung, insbesondere eines Drehwinkels, des Pedales. Von dem Sensor wird die Stellung des Pedales erfasst und mit Hilfe der von dem Sensor erfassten Stellung ist von einer Steuerungseinheit eine Stellung eines Drosselorganes, z. B. einer Luftklappe, in einem Ansaugkanal für einen Verbrennungsmotor steuerbar. In Abhängigkeit von der Stellung des Pedales wird somit mit Hilfe des Sensors die Leistung eines Antriebsmotors für ein Kraftfahrzeug, z. B. ein Verbrennungs- und/oder Elektromotor, gesteuert. Das Kraftfahrzeug verfügt somit über ein E-Gassystem.

In einer weiteren Ausgestaltung umfasst die Pedalanordnung ein Fahrpedalmodul und in das Fahrpedalmodul sind das elastische Element und/oder die Motoreinheit und/oder der Sensor integriert.

Insbesondere ist das Fahrpedalmodul mit wenigstens einem Halteelement, z. B. einer Halteplatte, in der Fahrposition gehalten und bei einem Unfall bricht bei einem Überschreiten wenigstens eines Grenzwertes der auf das Fahrpedalmodul bei dem Unfall wirkenden negativen Beschleunigungskräften das wenigsten eine Halteelement, so dass das Fahrpedalmodul zusammen mit dem Pedal von der Fahrposition nach vorne in die Unfallposition bewegbar ist. Bei einem Unfall des Kraftfahrzeuges ist somit auch eine Bewegung des Fahrpedalmodules von der Fahrposition in die Unfallposition zusammen mit dem Schlitten möglich. Dabei führt auch das Fahrpedal bzw. Pedal diese Bewegung nach vorne mit aus und somit kann auch das Fahrpedalmodul zusammen mit dem Pedal die Bewegung nach vorne ausführen. Dabei weist vorzugsweise die Bewegung des Fahrpedalmodules und vorzugsweise des Pedales von der Fahrposition in die Unfallposition neben der horizontalen Komponente nach vorne auch eine vertikale Komponente nach oben auf.

In einer weiteren Ausgestaltung umfasst die Pedalanordnung ein Basishalteteil und insbesondere ist das wenigstens eine Halteelement an dem Basishalteteil ausgebildet und/oder insbesondere ist zwischen dem Schlitten und dem Basishalteteil die Gleitlagerung ausgebildet.

Zweckmäßig ist das Pedal ein Bremspedal oder ein Kupplungspedal.

### Kurze Beschreibung der Zeichnungen

Im Nachfolgenden wird ein Ausführungsbeispiel der Erfindung unter Bezugnahme auf die beigefügten Zeichnungen näher beschrieben. Es zeigt:
- Fig. 1: eine stark vereinfachte Seitenansicht einer Pedalwertgeberanordnung,
- Fig. 2: eine perspektivische Teilansicht der Pedalwertgeberanordnung gemäß Fig. 1 und
- Fig. 3: eine perspektivische Teilansicht eines Schlittens und eines Basishalteteils der Pedalwertgeberanordnung gemäß Fig. 1 unterhalb der Schnittlinie A-A in Fig. 1 und

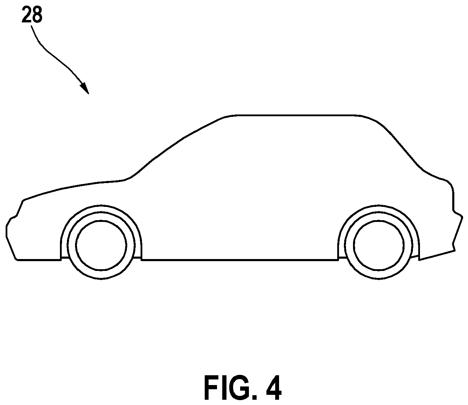

- Fig. 4: eine Seitenansicht eines Kraftfahrzeuges.

### Ausführungsformen der Erfindung

Eine Pedalwertgeberanordnung 2 als Pedalanordnung 1 wird in einem Kraftfahrzeug 28 mit einem nicht dargestellten Verbrennungs- und/oder Elektromotor als Antriebsmotor eingesetzt, um mit Hilfe eines E-Gassystems die Leistung des Antriebsmotors zu steuern und/oder zu regeln. Hierzu wird von einem Sensor 24 eine Stellung eines Pedales 3 als Fahrpedal bzw. Gaspedals 4 erfasst und in Abhängigkeit von der Stellung des Fahrpedales 4, die von einem Sensor 24 erfasst wird, die Leistung des Antriebsmotors des Kraftfahrzeuges 28 gesteuert und/oder geregelt. Bei einem Verbrennungsmotor als Antriebsmotor wird beispielsweise ein Drosselorgan z. B. eine Drosselklappe, von einem Stellmotor bewegt und bei einem Elektromotor wird die dem Elektromotor zugeführte elektrische Leistung entsprechend gesteuert und/oder geregelt (nicht dargestellt).

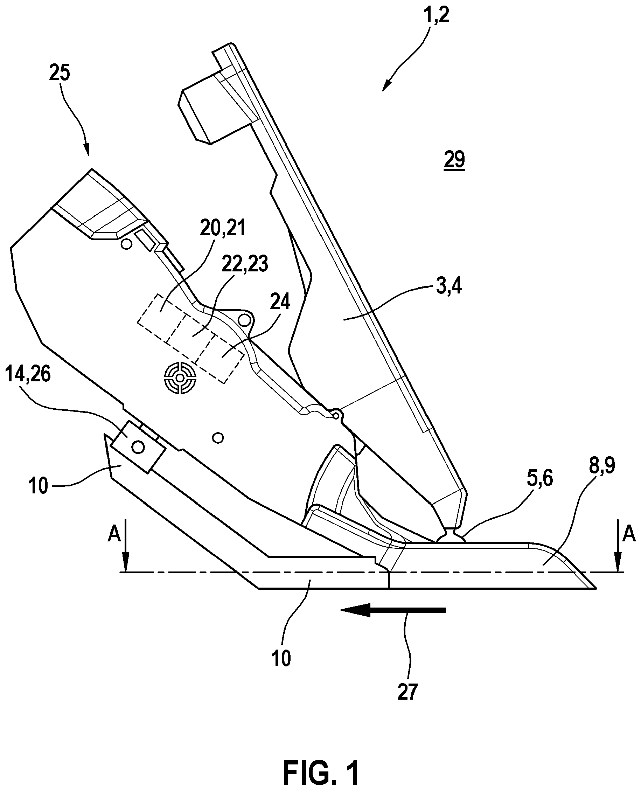

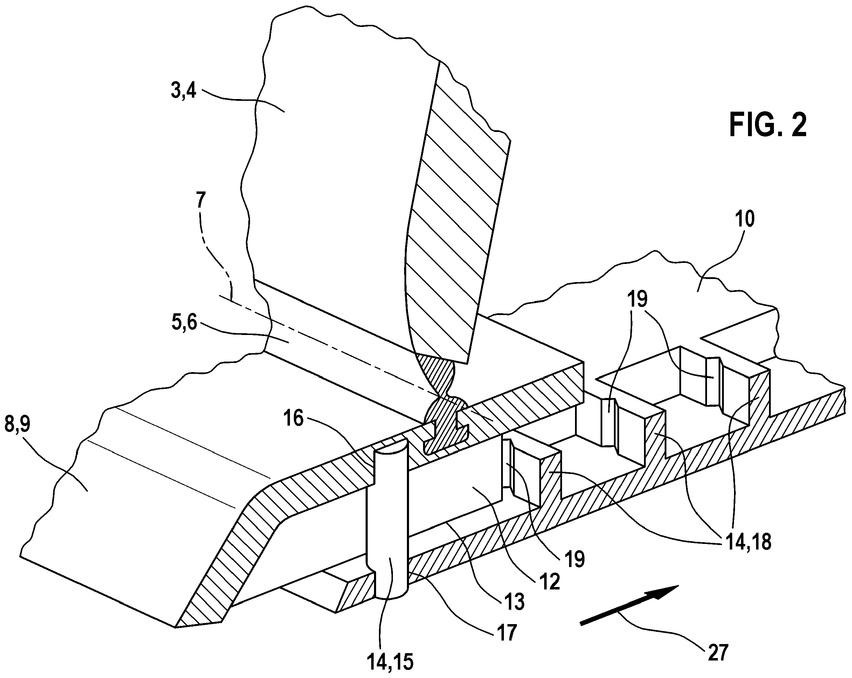

Das Pedal 3 ist an einem Lager 5 als Filmscharnier 6 um eine Drehachse 7 verschwenkbar gelagert (Fig. 2). Mit Hilfe eines Fußes kann vom Fahrer des Kraftfahrzeuges 28 auf das Fahrpedal 4 eine Kraft aufgebracht werden, so dass dadurch das Fahrpedal 4 von einer Ausgangsstellung in eine Endstellung bewegt wird. In der Ausgangsstellung wird von dem Antriebsmotor des Kraftfahrzeuges 28 die minimale Leistung, z. B. als Standgas, und in der Endstellung wird von dem Antriebsmotor des Kraftfahrzeuges 28 die maximale Leistung angefordert. Zum Bewegen des Fahrpedales 4 von der Ausgangsstellung in die Endstellung ist somit das Fahrpedal 4 entgegen dem Uhrzeigersinn gemäß der Darstellung in Fig. 1 um die Drehachse 7 zu bewegen, wobei die Drehachse 7 senkrecht auf der Zeichenebene von Fig. 1 steht. Von einem elastischen Element 20 als Feder 21 wird auf das Fahrpedal 4 ständig eine Rückstellkraft aufgebracht. Aufgrund dieser von der Feder 21 auf das Fahrpedal 4 aufgebrachten Rückstellkraft bewegt sich das Fahrpedal 4 in die Ausgangsstellung oder befindet sich in der Ausgangsstellung, sofern mit Hilfe des Fußes keine Druckkraft auf das Fahrpedal 4 aufgebracht ist.

Eine Motoreinheit 22 dient dazu, auf das Fahrpedal 4 zusätzlich zu dem elastischen Element 20 bzw. der Feder 21 eine ergänzende Rückstellkraft auf das Fahrpedal 4 aufbringen zu können. Die Motoreinheit 22 als Elektromotor 23 ist mit einer Welle mit einem Getriebe (nicht dargestellt) verbunden und das Getriebe ist mit der Fahrpedal 4 verbunden. Das elastische Element 20, die Motoreinheit 22 und der Sensor 24 sind in ein Fahrpedalmodul 25 eingebaut oder integriert. Das Kraftfahrzeug 28 umfasst dabei ein nicht dargestelltes Fahrassistenzsystem. Mit Hilfe des Fahrassistenzsystemes können Handlungsaufforderungen an den Fahrer des Kraftfahrzeuges übermittelt werden. Bei einem Betätigen der Motoreinheit 22 kann auf das Fahrpedal 4 eine zusätzliche Rückstellkraft aufgebracht werden und diese ist haptisch vom Fuß des Fahrers des Kraftfahrzeuges 28 wahrnehmbar. Wird von dem Fahrassistenzsystem beispielsweise ein zu geringer Sicherheitsabstand zu einem vorausfahrenden Kraftfahrzeug erfasst und/oder ein Überschreiten der zulässigen Höchstgeschwindigkeit des Kraftfahrzeuges 28, wird von der Motoreinheit 22 eine zusätzliche Rückstellkraft auf das Fahrpedal 4 übertragen, so dass dadurch eine Handlungsaufforderung an den Fahrer übermittelt werden kann. Der Fahrer soll somit in diesen beiden beschriebenen Situationen das Fahrpedal 4 geringfügig in Richtung zu der Ausgangsstellung bewegen und dadurch eine geringere Geschwindigkeit des Kraftfahrzeuges 28 bewirken.

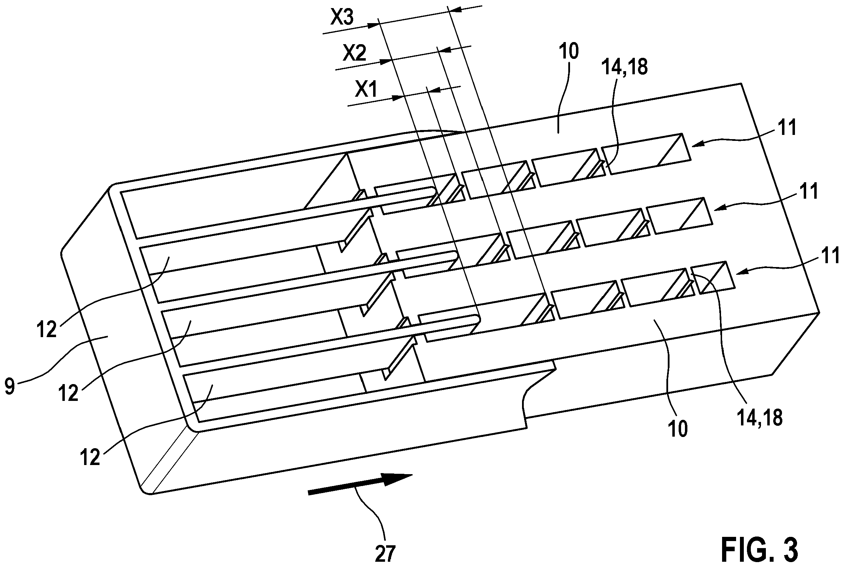

Die Pedalwertsgeberanordnung 2 umfasst darüber hinaus ein an der Karosserie des Kraftfahrzeuges 28 befestigtes Basishalteteil 10 aus Kunststoff und ein Lagerteil 8 als Schlitten 9. An dem Lagerteil 8 als Schlitten 9 ist das Filmscharnier 6 als Lager 5 für das Fahrpedal 4 angeordnet bzw. befestigt (Fig. 2). Einteilig an dem Basishalteteil 10 sind innerhalb von Schlitzen 11 mit einer Ausdehnung im Wesentlichen in Richtung einer Bewegungsrichtung 27 von einer Fahrposition des Schlittens 9 in eine Unfallposition mehrere Rippen 18 (Fig. 2 und 3) ausgebildet. Die Rippen 18 weisen dabei eine Nut 19 als Sollbruchstelle auf. An dem ebenfalls aus Kunststoff gefertigten Schlitten 9 sind ferner eine Vielzahl von Gleitschienen 12 einteilig ausgebildet. Der Schlitten 9 ist mit einem oder mehreren Haltestäben 15 an dem Basishalteteil 10 in der Fahrposition befestigt. Dabei sind die Haltestäbe 15 einerseits in einer Bohrung 16 an dem Schlitten 9 und zusätzlich in einer Bohrung 17 an dem Basishaltteil 10 angeordnet (Fig. 2). Die Rippen 18 und die Haltestäbe 15 stellen damit Halteelemente 14 für den Schlitten 9 dar.

Bei einem Unfall des Kraftfahrzeuges 28 ist das Kraftfahrzeug 28 starken negativen Beschleunigungskräften ausgesetzt. Diese starken negativen Beschleunigungskräfte des Kraftfahrzeuges 28 wirken auch auf den Schlitten 9, so dass aufgrund der Massenträgheit des Schlittens 9 sowie auch des Filmscharnieres 6 und des Pedales 3 auf den Schlitten 9 in Richtung der Bewegungsrichtung 27 von der Fahrposition in eine Unfallposition starke Beschleunigungskräfte wirken. Diese auf den Schlitten 9 wirkenden Beschleunigungskräfte führen dazu, dass aufgrund der konstruktiven Dimensionierung der Haltestäbe 15 die Haltestäbe 15 brechen und dadurch der Schlitten 9 zusammen mit dem Pedal 3 und dem Filmscharnier 6 eine Bewegung in Richtung der Bewegungsrichtung 27 ausführt. Der Schlitten 9 bewegt sich somit nach vorne in Richtung zu einem Motorraum des Kraftfahrzeuges 28 und während dieser Bewegung tritt nach einem zurückgelegten ersten Weg X1 von der Fahrposition in eine erste Unfallposition ein Kontakt einer Gleitschiene 12 mit einer Rippe 18 (Fig. 3) auf. Bei einer ausreichend großen Beschleunigungskraft des Schlittens 9 bricht diese Rippe 18 und nimmt einen Teil der Beschleunigungskräfte des Schlittens 9 auf. Bei einem weiteren Bewegungsweg des Schlittens 9 von der Fahrposition zu einer Unfallposition mit einer Weglänge von X2 wird analog eine weitere Rippe 18 durchbrochen und bei einem weiteren Bewegungsweg X3 wird eine ergänzende Rippe 18 durchbrochen. In der weiteren Bewegung des Schlittens 9 werden bei einer ausreichend großen negativen Beschleunigungskraft auf den Schlitten 9 sämtliche Rippen 18 durchbrochen und dadurch die Beschleunigungskräfte des Schlittens 9 aufgenommen bis die Gleitschienen 12 am Ende der Schlitze 11 auf dem Basishalteteil 10 aufliegen. Aufgrund dieser Bewegung von der Fahrposition in die Unfallposition des Schlittens 9 bewegt sich auch das Pedal 3 und das Filmscharnier 6 mit, so dass sich dadurch der Fußraum 29 vergrößert. Bei einem kleineren Unfall mit auftretenden kleinen negativen Beschleunigungskräften an dem Schlitten 9 kann dieser auch schon vorher nach dem Durchbrechen von z. B. nur zwei oder drei Rippen zum Stillstand kommen, so dass je größer die auf den Schlitten 9 wirkenden negativen Beschleunigungskräfte sind, desto größer der von dem Schlitten 9 nach vorne ausgeführt Weg von der Fahrposition in die Unfallposition ist.

Bei der Bewegung des Schlittens 9 von der Fahrposition in die Unfallposition führt auch ein mechanisch mit dem Pedal 3 verbundenes Fahrpedalmodul 25 eine derartige Bewegung nach vorne mit aus. Dabei ist das Fahrpedalmodul 25 mit einer oder zwei Halteplatten 26 an dem Basishalteteil 10 befestigt (Fig. 1). Das Basishalteteil 10 weist dabei einen Abschnitt mit einer Neigung auf, an welchem die Halteplatte 26 befestigt ist. Die Halteplatte 26 aus Kunststoff ist dabei dahingehend dimensioniert, dass dieses bei ausreichend großen negativen Beschleunigungskräften an dem Fahrpedalmodul 25 bricht und dadurch sich das Fahrpedalmodul 25 zusammen mit dem Pedal 3 nach vorne bewegen kann. Dabei weist aufgrund der Neigung des Basishalteteils 10 im Bereich der Halteplatte 26 die Bewegung des Fahrpedalmodules 25 von der Fahrposition in die Unfallposition neben der horizontalen Komponente nach vorne auch eine vertikale Komponente nach oben auf. Sowohl der Schlitten 9 als auch das Fahrpedalmodul 25 sind mittels einer Gleitlagerung 13 an dem Basishalteteil 10 gelagert. Insbesondere liegen die Gleitschienen 12 an dem Basishalteteil 10 auf, so dass sich die Gleitlagerung 13 zwischen den Gleitschienen 12 und dem Basishalteteil 10 ausbildet.

Insgesamt betrachtet sind mit der erfindungsgemäßen Pedalanordnung 1 wesentliche Vorteile verbunden. Der Schlitten 9 führt allein aufgrund der auf den Schlitten 9 wirkenden negativen Beschleunigungskräfte eine Bewegung von der Fahrposition in die Unfallposition aus, so dass dadurch der Fußraum 29 bei einem Unfall vergrößert werden kann. In vorteilhafter Weise sind somit keine aufwendigen aktiven und störungsanfälligen Stellantriebe zur Bewegung des Pedales 3 erforderlich, weil das Pedal 3 zusammen mit dem Schlitten 9 die Bewegung von der Fahrposition in die Unfallposition mit ausführt.

## Patentansprüche

1. Pedalanordnung (1), insbesondere Pedalwertgeberanordnung (2), für ein Kraftfahrzeug (28), umfassend
-- ein zwischen einer Ausgangsstellung und einer Endstellung bewegliches Pedal (3), insbesondere Fahrpedal (4),
-- ein Lager (5) für das Pedal (3),
-- ein Lagerteil (8), an welchem das Lager (5) angeordnet ist,
-- eine Einrichtung (9) zum Bewegen des Pedales (3) bei einem Unfall nach vorne,
wobei das Lagerteil (8) als ein beweglicher Schlitten (9) ausgebildet ist, so dass bei einem Unfall der Schlitten (9) zusammen mit dem Lager (5) und dem Pedal (3) nach vorne von einer Fahrposition in eine Unfallposition bewegbar ist, wobei der Schlitten (9) und damit auch das Lagerteil (8) und das Pedal (3) erst bei einem Überschreiten wenigstens eines Grenzwertes der auf den Schlitten (9) bei dem Unfall wirkenden negativen Beschleunigungskräften nach vorne bewegbar ist,
**dadurch gekennzeichnet, dass**
je größer die auf den Schlitten (9) wirkenden negativen Beschleunigungskräfte sind, desto größer der von dem Schlitten (9) nach vorne ausgeführte Weg von der Fahrposition in die Unfallposition ist und umgekehrt.

2. Pedalanordnung nach Anspruch 1, **dadurch gekennzeichnet, dass** der Schlitten (9), das Lagerteil (8) und das Pedal (3) aufgrund der bei einem Unfall wirkenden negativen Beschleunigungskräfte nach vorne bewegbar sind.

3. Pedalanordnung nach Anspruch 2, **dadurch gekennzeichnet, dass** der Schlitten (9) mittels einer Gleitlagerung (13) bei der Bewegung von der Fahrposition in die Unfallposition beweglich gelagert ist.

4. Pedalanordnung nach Anspruch 2 oder 3, **dadurch gekennzeichnet, dass** der Schlitten (9) bei einem normalen Fahrbetrieb des Kraftfahrzeuges (28) von wenigstens einem Halteelement (14) in der Fahrposition gehalten ist.

5. Pedalanordnung nach Anspruch 4, **dadurch gekennzeichnet, dass** das wenigstens eine Haltelement (14) wenigstens ein Haltestab (15) und/oder wenigstens eine Rippe (18) ist.

6. Pedalanordnung nach Anspruch 4 oder 5, **dadurch gekennzeichnet, dass** bei einem Unfall aufgrund der auf den Schlitten (9) wirkenden negativen Beschleunigungskräfte das wenigstens eine Halteelement (14) bricht aufgrund der von dem Schlitten (9) mittelbar oder unmittelbar auf das wenigstens eine Halteelement (14) aufgebrachten Kräfte, so dass der Schlitten (9) von der Fahrposition in die Unfallposition bewegbar ist.

7. Pedalanordnung nach einem der Ansprüche 4 bis 6, **dadurch gekennzeichnet, dass**
mindestens zwei Haltelemente (14) vorgesehen sind, wobei die Haltelemente (14) so angeordnet sind, dass bei einer Bewegung des Schlittens (9) von der Fahrposition in die Unfallposition das eine Haltelement (14) der mindestens zwei Haltelemente (14) zeitlich versetzt zu dem anderen Haltelement (14) bricht.

8. Pedalanordnung nach Anspruch 7, **dadurch gekennzeichnet, dass** die zum Brechen des einen Haltelements (14) erforderliche Kraft von der zum Brechen des anderen Haltelements (14) erforderlichen Kraft abweicht.

9. Pedalanordnung nach Anspruch 8, **dadurch gekennzeichnet, dass** bei Bewegung des Schlittens von der Fahrposition in die Unfallposition die zum Durchbrechen der mindestens zwei Haltelement (14) erforderliche jeweilige Kraft bei dem zeitlich später brechenden Haltelement (14) größer ist als bei dem davor brechenden Haltelement (14).

10. Pedalanordnung nach Anspruch 7, **dadurch gekennzeichnet, dass** mehrere Halteelemente (14) bzw. Rippen (18) bzw. Haltestäbe (15) hintereinander, vorzugsweise zusätzlich versetzt, in einer Richtung von der Fahrposition zu der Unfallposition ausgebildet sind.

11. Pedalanordnung nach einem oder mehreren der vorhergehenden Ansprüche, **dadurch gekennzeichnet, dass**
die Pedalanordnung (1) ein Fahrpedalmodul (25) umfasst und in das Fahrpedalmodul (25) ein elastische Element (20) und/oder eine Motoreinheit (22) und/oder ein Sensor (24) integriert sind.

12. Pedalanordnung nach Anspruch 11, **dadurch gekennzeichnet, dass** das Fahrpedalmodul (25) mit wenigstens einem Halteelement (14), z. B. einer Halteplatte (26), in der Fahrposition gehalten ist und bei einem Unfall bei einem Überschreiten wenigstens eines Grenzwertes der auf das Fahrpedalmodul (25) bei dem Unfall wirkenden negativen Beschleunigungskräften das wenigsten eine Halteelement (14) bricht, so dass das Fahrpedalmodul (25) zusammen mit dem Pedal (3) von der Fahrposition nach vorne in die Unfallposition bewegbar ist.

13. Pedalanordnung nach einem oder mehreren der vorhergehenden Ansprüche,
**dadurch gekennzeichnet, dass**
die Pedalanordnung (1) ein Basishalteteil (10) umfasst und
insbesondere das wenigstens eine Halteelement (14) an dem Basishalteteil (10) ausgebildet ist
und/oder
insbesondere zwischen dem Schlitten (9) und dem Basishalteteil (10) die Gleitlagerung (13) ausgebildet ist.

## Claims

1. Pedal arrangement (1), in particular pedal position sensor arrangement (2), for a motor vehicle (28), comprising
- a pedal (3), in particular an accelerator pedal (4), which can be moved between a starting position and an end position,
- a bearing (5) for the pedal (3),
- a bearing part (8), on which the bearing (5) is arranged,
- a device (9) for moving the pedal (3) forwards in the case of an accident,
the bearing part (8) being configured as a movable slide (9), with the result that, in the case of an accident, the slide (9) can be moved forwards together with the bearing (5) and the pedal (3) from a driving position into an accident position,
it being possible for the slide (9) and therefore also the bearing part (8) and the pedal (3) to be moved forwards only if at least one limit value of the negative acceleration forces which act on the slide (9) in the case of an accident is exceeded,
**characterized in that**
the greater the negative acceleration forces which act on the slide (9), the greater the travel which is carried out forwards by the slide (9) from the driving position into the accident position and vice versa.

2. Pedal arrangement according to Claim 1, **characterized in that** the slide (9), the bearing part (8) and the pedal (3) can be moved forwards on account of the negative acceleration forces which act in the case of an accident.

3. Pedal arrangement according to Claim 2, **characterized in that** the slide (9) is movably mounted by means of a plain bearing (13) during the movement from the driving position into the accident position.

4. Pedal arrangement according to Claim 2 or 3, **characterized in that** the slide (9) is held in the driving position by at least one holding element (14) during normal driving operation of the motor vehicle (28).

5. Pedal arrangement according to Claim 4, **characterized in that** the at least one holding element (14) is at least one holding rod (15) and/or at least one rib (18).

6. Pedal arrangement according to Claim 4 or 5, **characterized in that**, in the case of an accident, on account of the negative acceleration forces which act on the slide (9), the at least one holding element (14) breaks on account of the forces which are applied by the slide (9) indirectly or directly to the at least one holding element (14), with the result that the slide (9) can be moved from the driving position into the accident position.

7. Pedal arrangement according to one of Claims 4 to 6, **characterized in that**
at least two holding elements (14) are provided, the holding elements (14) being arranged in such a way that, during a movement of the slide (9) from the driving position into the accident position, the one holding element (14) of the at least two holding elements (14) breaks in a temporally staggered manner with respect to the other holding element (14).

8. Pedal arrangement according to Claim 7, **characterized in that** the force which is required to break the one holding element (14) differs from the force which is required to break the other holding element (14).

9. Pedal arrangement according to Claim 8, **characterized in that**, during a movement of the slide from the driving position into the accident position, the respective force which is required to break through the at least two holding elements (14) is greater in the case of the holding element (14) which brakes at a later time than in the case of the holding element (14) which breaks before it.

10. Pedal arrangement according to Claim 7, **characterized in that** a plurality of holding elements (14) and/or ribs (18) and/or holding rods (15) are arranged behind one another, preferably additionally in an offset manner, in a direction from the driving position to the accident position.

11. Pedal arrangement according to one or more of the preceding claims, **characterized in that**
the pedal arrangement (1) comprises an accelerator pedal module (25), and an elastic element (20) and/or a motor unit (22) and/or a sensor (24) are integrated into the accelerator pedal module (25).

12. Pedal arrangement according to Claim 11, **characterized in that** the accelerator pedal module (25) is held in the driving position by way of at least one holding element (14), for example a holding plate (26), and, in the case of an accident, the at least one holding element (14) breaks if at least one limit value of the negative acceleration forces which act on the accelerator pedal module (25) in the case of the accident is exceeded, with the result that the accelerator pedal module (25) can be moved forwards together with the pedal (3) from the driving position into the accident position.

13. Pedal arrangement according to one or more of the preceding claims, **characterized in that**
the pedal arrangement (1) comprises a base holding part (10), and,
in particular, the at least one holding element (14) is configured on the base holding part (10),
and/or
the slide bearing (13) is configured, in particular, between the slide (9) and the base holding part (10).

## Revendications

1. Agencement de pédale (1), en particulier agencement de capteur de valeur de pédale (2) pour un véhicule automobile (28), comprenant
- une pédale (3), en particulier une pédale d'accélérateur (4), déplaçable entre une position de départ et une position finale,
- un support (5) pour la pédale (3),
- une partie de support (8) sur laquelle est disposé le support (5),
- un dispositif (9) pour déplacer la pédale (3) vers l'avant en cas d'accident,
la partie de support (8) étant réalisée sous forme de chariot mobile (9) de telle sorte que dans le cas d'un accident, le chariot (9), conjointement avec le support (5) et la pédale (3), puisse être déplacé vers l'avant d'une position de conduite dans une position d'accident, le chariot (9), et par conséquent également la partie de support (8) et la pédale (3), pouvant être déplacé vers l'avant seulement en cas de dépassement d'au moins une valeur limite des forces d'accélération négatives agissant sur le chariot (9) en cas d'accident,
**caractérisé en ce que**
plus les forces d'accélération négatives agissant sur le chariot (9) sont élevées, plus la course parcourue vers l'avant par le chariot (9) de la position de conduite dans la position d'accident est grande et inversement.

2. Agencement de pédale selon la revendication 1, **caractérisé en ce que** le chariot (9), la partie de support (8) et la pédale (3), du fait des forces d'accélération négatives agissant lors d'un accident, peuvent être déplacés vers l'avant.

3. Agencement de pédale selon la revendication 2, **caractérisé en ce que** le chariot (9) est supporté de manière déplaçable au moyen d'un palier lisse (13) lors du déplacement de la position de conduite dans la position d'accident.

4. Agencement de pédale selon la revendication 2 ou 3, **caractérisé en ce que** le chariot (9) est maintenu dans la position de conduite pendant un mode de conduite normal du véhicule automobile (28) par au moins un élément de retenue (14).

5. Agencement de pédale selon la revendication 4, **caractérisé en ce que** l'au moins un élément de retenue (14) est au moins une barre de retenue (15) et/ou au moins une nervure (18).

6. Agencement de pédale selon la revendication 4 ou 5, **caractérisé en ce que** dans le cas d'un accident, sur la base des forces d'accélération négatives agissant sur le chariot (9), l'au moins un élément de retenue (14) se rompt sous l'effet des forces appliquées par le chariot (9) directement ou indirectement sur l'au moins un élément de retenue (14), de telle sorte que le chariot (9) puisse être déplacé de la position de conduite dans la position d'accident.

7. Agencement de pédale selon l'une quelconque des revendications 4 à 6, **caractérisé en ce qu'**au moins deux éléments de retenue (14) sont prévus, les éléments de retenue (14) étant disposés de telle sorte que dans le cas d'un déplacement du chariot (9) de la position de conduite dans la position d'accident, l'un des éléments de retenue (14) des au moins deux éléments de retenue (14) se rompe avec un décalage dans le temps par rapport à l'autre élément de retenue (14).

8. Agencement de pédale selon la revendication 7, **caractérisé en ce que** la force requise pour rompre l'un des éléments de retenue (14) est différente de la force nécessaire pour rompre l'autre élément de retenue (14).

9. Agencement de pédale selon la revendication 8, **caractérisé en ce que** lors du déplacement du chariot de la position de conduite dans la position d'accident, la force à chaque fois nécessaire pour rompre les au moins deux éléments de retenue (14) est supérieure pour l'élément de retenue (14) qui se rompt ultérieurement que pour l'élément de retenue (14) qui se rompt en premier.

10. Agencement de pédale selon la revendication 7, **caractérisé en ce que** plusieurs éléments de retenue (14) ou nervures (18) ou barres de retenues (15) sont réalisés les uns derrière les autres, de préférence en outre de manière décalée, dans une direction allant de la position de conduite dans la position d'accident.

11. Agencement de pédale selon l'une quelconque ou plusieurs des revendications précédentes, **caractérisé en ce que**
l'agencement de pédale (1) comprend un module de pédale d'accélération (25), et un élément élastique (20) et/ou une unité de moteur (22) et/ou un capteur (24) sont intégrés dans le module de pédale d'accélération (25).

12. Agencement de pédale selon la revendication 11, **caractérisé en ce que** le module de pédale d'accélération (25) est retenu dans la position de conduite par au moins un élément de retenue (14), par exemple une plaque de retenue (26), et dans le cas d'un accident, en cas de dépassement d'au moins une valeur limite des forces d'accélération négatives agissant sur le module de pédale d'accélération (25) en cas d'accident, l'au moins un élément de retenue (14) se rompt, de telle sorte que le module de pédale d'accélération (25), conjointement avec la pédale (3), puisse être déplacé de la position de conduite vers l'avant dans la position d'accident.

13. Agencement de pédale selon l'une quelconque ou plusieurs des revendications précédentes,
**caractérisé en ce que**
l'agencement de pédale (1) comprend une partie de retenue de base (10) et en particulier l'au moins un élément de retenue (14) est réalisé sur la partie de retenue de base (10) et/ou en particulier le palier lisse (13) est réalisé entre le chariot (9) et la partie de retenue de base (10).
